# EUROPÄISCHE PATENTSCHRIFT

(11) **EP 1 414 616 B1**
(45) Veröffentlichungstag und Bekanntmachung des Hinweises auf die Patenterteilung: **23.01.2008**
(21) Anmeldenummer: 01960020.4
(22) Anmeldetag: 09.08.2001
(51) Int. Cl.: B23Q 3/155, B23Q 3/157

(54) **WERKZEUGMAGAZIN**
TOOL MAGAZINE
DISPOSITIF DE CHANGEMENT D'OUTIL

(43) Veröffentlichungstag der Anmeldung: 06.05.2004
(73) Patentinhaber: LERINC Innovative Technologien GmbH, 42579 Heiligenhaus (DE)
(72) Erfinder: KISSLIG, Heinz, CH-8552 Felben (CH)
(74) Vertreter: Mann, Volker
(86) Internationale Anmeldenummer: PCT/CH2001/000488
(87) Internationale Veröffentlichungsnummer: WO 2003/013782

(56) Entgegenhaltungen:
- EP-A- 0 144 912
- EP-A- 0 636 451
- EP-A- 0 803 319
- EP-A- 1 086 781
- DE-A- 3 816 861
- DE-A- 3 818 564
- DE-A- 19 510 498
- DE-U- 8 520 123
- US-A- 3 339 273
- PATENT ABSTRACTS OF JAPAN vol. 2000, no. 15, 6. April 2001 (2001-04-06) -& JP 2000 343367 A (MORI MACHINERY CORP), 12. Dezember 2000 (2000-12-12)

## Beschreibung

Die vorliegende Erfindung betrifft ein Werkzeugmagazin, mit einer Dockstation zur Entgegennahme und Rückgabe von Werkzeugen, einer Uebergabestation zur Uebergabe und Zurücknahme von Werkzeugen an bzw. von einer Werkzeugmaschine und zwischen Dockstation und Uebergabestation angeordneten Lagerstationen.

Bei modernen Werkzeugmaschinen bzw. Bearbeitungszentren werden an die Lagerung bzw. Bereitstellung der Werkzeuge im Hinblick auf deren computergesteuerte Uebergabe an bzw. Rücknahme von der Werkzeugmaschine immer höhere Anforderungen gestellt, indem die Wechselzeiten (Span zu Span-Zeiten) immer noch weiter zu optimieren sind. Grundsätzlich lässt sich die Aufgabe durch ein geeignetes Lagersystem (Magazin) lösen und das gewünschte Handling der Werkzeuge über einen Computer steuern.

Aus DE 38 16 861 geht die Zuführung von Werkzeugen aus Werkzeugmagazinen hervor, mit welcher mehrere Bearbeitungsmaschinen bedient werden können. Das gezeigte Lagersystem ist allerdings ausserordentlich aufwändig gestaltet und zeigt insbesondere bezüglich Optimierung des Platzbedarfes keine überzeugende Lösung.

Nachteilig dabei ist jedoch ein immer grösserer Platzbedarf, welcher es oft verunmöglicht, für jedes Bearbeitungszentrum das optimale Werkzeughandling-System aufzustellen.

Aufgabe der vorliegenden Erfindung war die Schaffung eines besonders gestalteten Werkzeugmagazins, welches als eigenständiges Werkzeughandling-System für eine Vielzahl von normalgrossen und übergrossen Werkzeugen auf die anfallenden Bedürfnisse eines Bearbeitungszentrums optimal angepasst werden kann. Es soll ein einfaches Werkzeugdatenhandling und unabhängig von der Maschinenlebensdauer sehr kurze Span zu Span-Zeiten erlauben.

Diese Aufgabe wurde bei einem Werkzeugmagazin der eingangs definierten Art erfindungsgemäss durch die Merkmale des kennzeichnenden Teils von Anspruch 1 gelöst.

Besonders vorteilhafte Ausführungsformen des Erfindungsgegenstandes sind in den abhängigen Ansprüchen definiert.

Der Kern der Erfindung liegt im besonderen modularen Aufbau des Werkzeugmagazins, welches insbesondere durch Einbau der erforderlichen Anzahl von Lagermodulen auf die optimale Grösse eingerichtet werden kann (Kundenwunsch), wobei die Ausgestaltung der einzelnen Lagermodule, nämlich jeweils aus zwei sich spiegelbildlich gegenüberliegenden Teilmodulen mit Zwischengang für den Handlingroboter, weiter zur Optimierung beiträgt.

Im Dockmodul werden die Werkzeuge an das eigentliche Magazin (Lagermodule) übergeben oder diesem entnommen.

Die Werkzeuglagermodule bieten vorzugsweise je 96 normalgrossen Werkzeugen in vier sich paarweise gegenüberliegenden vertikalen Rechen Platz. Ideal ist ein solches Magazin ab ca. 300 bereitzuhaltenden Werkzeugen. Für übergrosse Werkzeuge lassen sich die Teilmodule entsprechend einrichten.

Als normalgrosse Werkzeuge werden solche bis Ø 130 mm und Länge von 500 mm bezeichnet, als übergrosse Werkzeuge solche bis Ø 230 mm und Länge von 500 mm.

Im Uebergabemodul werden die Werkzeuge an die Werkzeugmaschine übergeben bzw. von dieser zurückgenommen. Dank einem besonderen Uebergabevorgang und Computerprogramm steht das nachfolgende Werkzeug ebenfalls sofort zum Einwechseln zur Verfügung. Insbesondere dadurch lassen sich die Span zu Span-Zeiten für das zweite Werkzeug praktisch auf die Einwechselzeit der Werkzeugmaschine selbst reduzieren.

Durch die Ausgestaltung des Handlingroboters und des Wechselarms im Uebergabemodul werden mit dem Erfindungsgegenstand alle Handlingsaufgaben mit nur fünf Bewegungsmöglichkeiten gelöst, nämlich
- eine waagrechte Bewegung des am Roboter angeordneten Werkzeuggreifers durch alle Module (waagrechte Achse);
- eine senkrechte Bewegung des Werkzeuggreifers (senkrechte Achse);
- eine Drehbewegung der Vertikalachse des Roboters (Drehachse);
- eine Bewegung zum Ein- bzw. Ausführen des Werkzeuges, und
- eine Uebergabebewegung, d.h. der eigentliche Austausch mittels eines um 180° schwenkbaren Wechselarmes des Werkzeuges mit der Werkzeugmaschine.

Jedes Werkzeug kann in einem Halter, einer sogenannten Werkzeugkassette, aufgenommen und damit gehalten und am gewünschten (programmierten) Platz eingelagert werden.

Die Kassetten oder Halter sind entsprechend dem jeweiligen Werkzeugaufnahmekonus ausgerüstet.

Die Erfindung wird nachstehend anhand von in der Zeichnung dargestellten Ausführungsbeispielen noch etwas näher beschrieben.

Es zeigt:
- Fig. 1: rein schematisch, einen Werkzeugdatenfluss zwischen Eindockstelle und Werkzeugmaschine;
- Fig. 2: eine Variante des Werkzeugdatenflusses;
- Fig. 3: eine schematische, schaubildliche Darstellung eines Dockmoduls;
- Fig. 4a: das Dockmodul nach Fig. 3 in Frontansicht (vom anschliessenden Lagermodul aus);
- Fig. 4b: das Dockmodul nach Fig. 3 von einer Seite;
- Fig. 4c: das Dockmodul nach Fig. 3 in Draufsicht;
- Fig. 5: eine schematische, schaubildliche Darstellung eines Lagermoduls;
- Fig. 6a: das Lagermodul nach Fig. 5 in Frontansicht;
- Fig. 6b: das Lagermodul nach Fig. 5 von einer Seite;
- Fig. 6c: das Lagermodul nach Fig. 5 in Draufsicht;
- Fig. 7: eine schematische schaubildliche Darstellung des Uebergabemoduls;
- Fig. 8a: das Uebergabemodul nach Fig. 7 in Endansicht;
- Fig. 8b: das Uebergabemodul nach Fig. 7 von einer Seite;
- Fig. 8c: das Uebergabemodul nach Fig. 7 in Draufsicht, und
- Fig. 9: schematisch eine Gesamtansicht des Werkzeugmagazins.

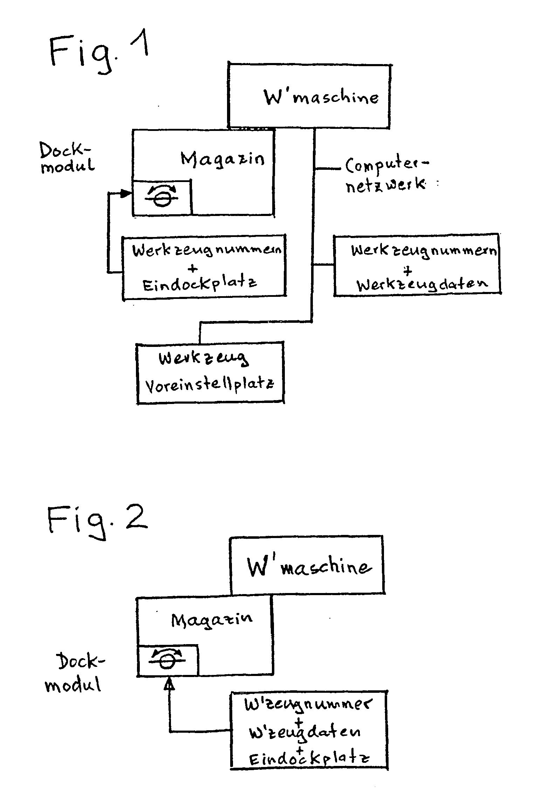

Figur 1 der Zeichnung zeigt informationshalber den Werkzeugdatenfluss beim Arbeiten mit einem erfindungsgemässen Werkzeugmagazin mit einer Werkzeugmaschine: Die Werkzeugnummer und die Werkzeugdaten gehen über eine Datenleitung 1 vom Voreinstellplatz direkt in die Werkzeugmaschine 2. Dem Werkzeugmagazin 3 werden beim Eindocken über das Dockmodul 3' nur noch die Werkzeugnummer und der Eindockplatz (Lagerplatz) für die Werkzeuglogistik mitgeteilt.

Figur 2 zeigt eine mögliche Variante eines Werkzeugdatenflusses. Dabei werden die Werkzeugnummer, die Werkzeugdaten und der Eindockplatz (Lagerplatz) beim Eindocken des Werkzeuges am Dockmodul 3' eingegeben. Dabei werden Werkzeugnummer und Werkzeugdaten an die Werkzeugmaschine 2 weitergeleitet.

Die Werkzeugnummer und der Eindockplatz werden vom Magazin für die Werkzeuglogistik benötigt.

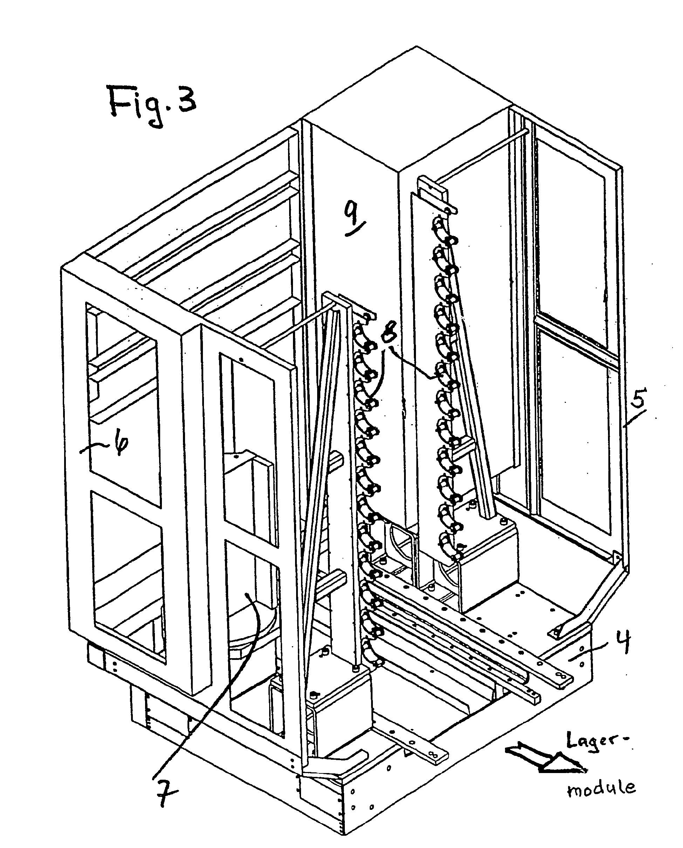

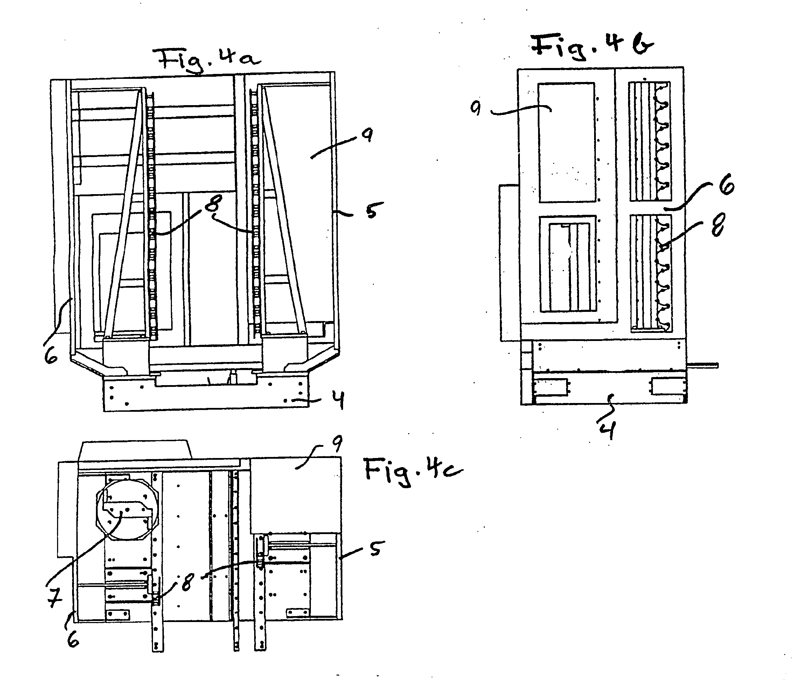

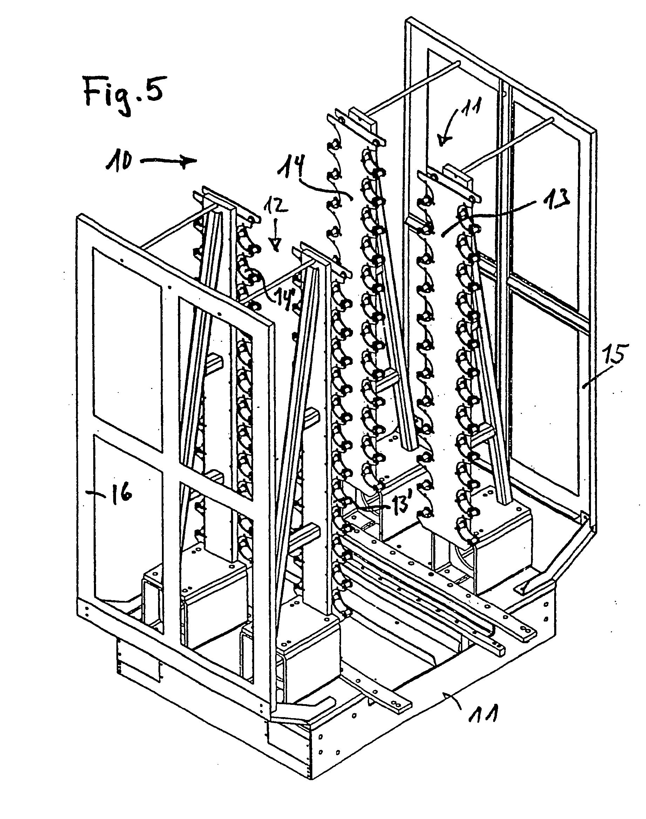

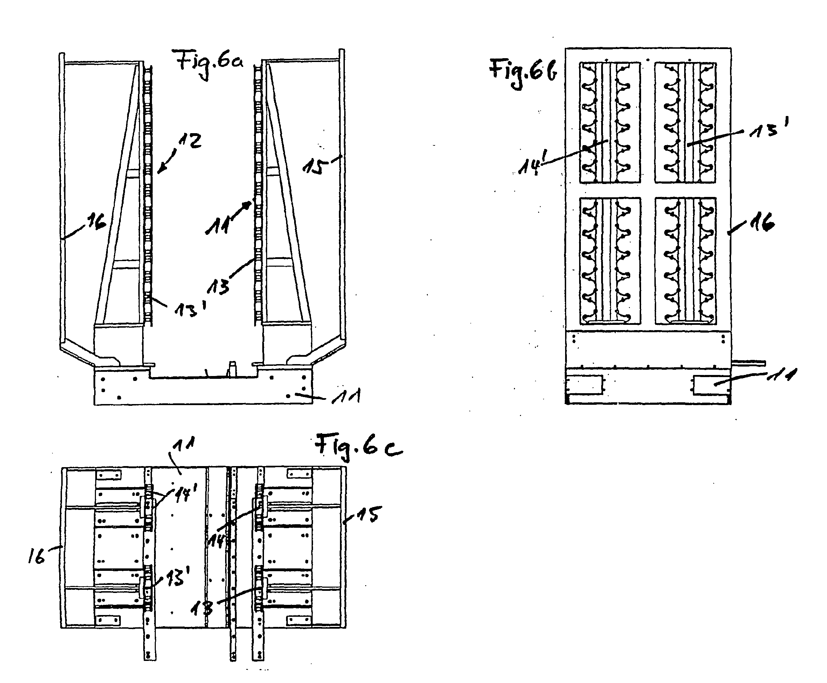

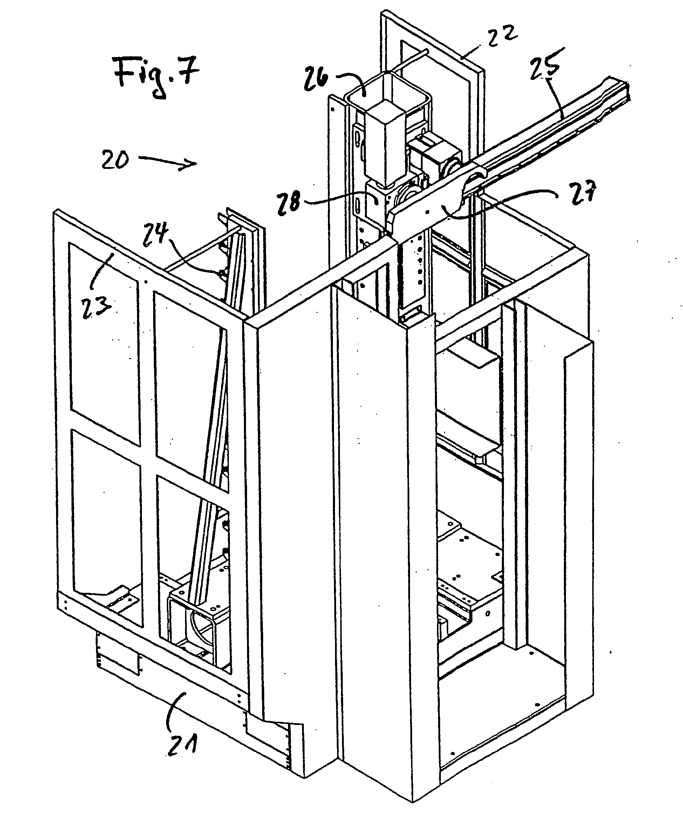

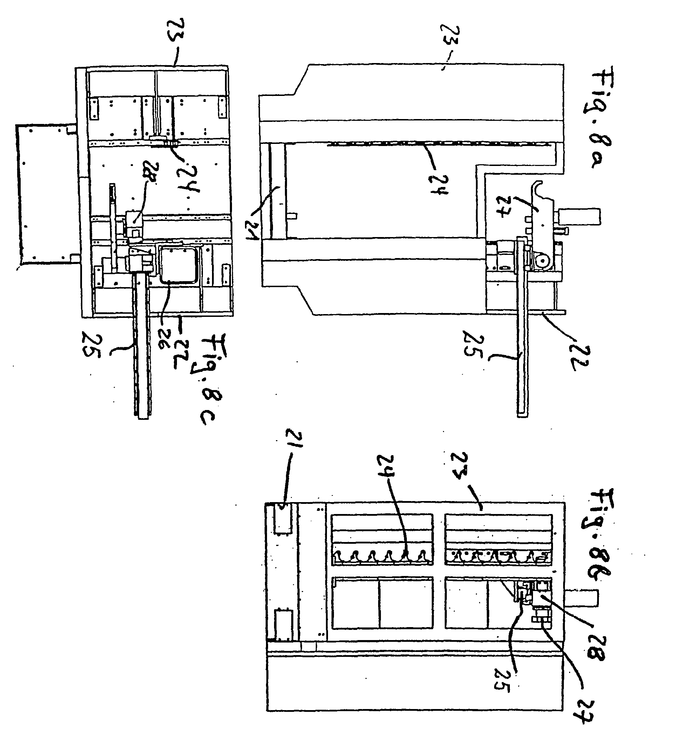

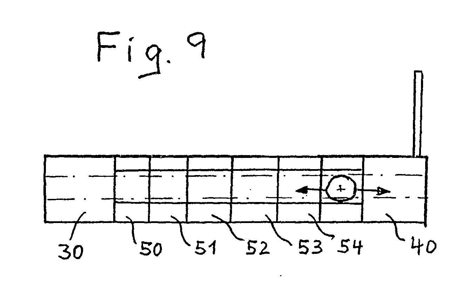

Figur 3 und Figuren 4a, 4b und 4c illustrieren den Aufbau eines Dockmoduls. Es weist auf: einen Sockel 4, Seitenrahmen 5 und 6 (z.B. zum Anbringen einer Verschalung), einen um eine Vertikalachse drehbaren Werkzeugrechen 7, Lagerplätze 8 (insgesamt 24 für Normalwerkzeuge oder 12 normale und 6 übergrosse Werkzeuge) Werkzeuge, nutzbar als "Zwischenlager", sowie einen Elektroschrank 9 (Steuer- und Schaltschrank). Am Sockel 4 angebrachte Schienen dienen dem Anschluss an die nachfolgenden Lagermodule.

Der um 180° dreh- bzw. schwenkbare Werkzeugrechen 7 kann mit einer Anzahl (hier 5) Werkzeugen zum Eindocken beschickt werden. Ein verfahrbarer Roboter (nicht dargestellt) holt die Werkzeuge und bringt sie zum vorprogrammierten Werkzeugplatz, oder der Roboter bringt die vorbestimmten Werkzeuge aus dem Magazin in den Werkzeugrechen 8 zum Herausnehmen.

Der Elektroschrank 9 mit den Schalt- und Bedienungselementen ist in einer Ecke neben einem der Werkzeugrechen 8 angeordnet.

Figur 5 und die Figuren 6a, 6b und 6c illustrieren eine Ausführungsform eines Lagermoduls 10, (Trägermodul), welches auf einem Sockel 11 zwei sich spiegelbildlich gegenüberliegende Teilmodule 12, 13 aufweist, von denen jedes zwei vertikale doppelreihige Rechen 13, 14 bzw. 13', 14' aufweist, welche der Aufnahme von Werkzeugen bzw. deren Halte-Kassetten dienen. Jedem Platz ist eine ganz bestimmte Platznummer zugeordnet. Zwischen den sich gegenüberliegenden Teilmodulen 11, 12 ist ein Zwischengang gebildet, durch den ein Handlingroboter (nicht dargestellt) auf Schienen verfahrbar ist.

Ein am Roboter angeordneter Werkzeuggreifer (nicht dargestellt) kann sich horizontal, vertikal und in eine Vertikalachse bewegen und damit zu jeder beliebigen Lagerstelle gebracht werden, um ein Werkzeug abzuholen oder abzugeben. Durch die Verfahrbarkeit des Roboters ist somit jede Stelle zwischen Dockmodul und Uebergabemodul (s. unten) ansteuerbar.

Auch die Lagermodule sind mit Rahmen 15, 16 für Verschalungen ausgerüstet. Eine beliebige Anzahl von Lagermodulen kann in Serie zusammengebaut werden, mit dem Dockmodul am einen Kopfende und dem Uebergabemodul am anderen.

Die Lagermodule 10 werden zwischen Dockmodul und Uebergabemodul eingesetzt. Jedes Lagermodul bietet z.B. Platz für 96 Normalwerkzeuge. Je nach verlangter Anzahl Werkzeuge kann eine beliebige Anzahl Lagermodule eingesetzt werden (Nachrüstung bzw. Anpassung an neue Verhältnisse jederzeit möglich).

Verbleibt noch als wesentliche Komponente des Werkzeugmagazins das in Figur 7 und den Figuren 8a, 8b und 8c gezeigte Uebergabemodul 20, mit Sockel 21, Seitenrahmen 22, 23 und einem Lagerrechen 24, (z.B. als Zwischenlager für Werkzeuge). Zum Uebergabemodul 20 führt ein pneumatischer Linearzylinder 25, welcher das Modul mit der Werkzeugmaschine (nicht dargestellt) verbindet.

An einer seitlichen Säule 26 ist über eine Dreh- bzw. Schwenkmechanik 28 ein Werkzeug-Wechselarm 27 vorgesehen, welcher vom Roboter in das Uebergabemodul gebrachte Werkzeuge übernimmt, um 180° dreht und das Werkzeug an den Linearzylinder 25 übergibt.

Der Linearzylinder 25 bringt das Werkzeug in eine Stellung, in welcher es von der Werkzeugmaschine übernommen wird, oder es wird von letzterer an den Linearzylinder zum Rücktransport übergeben.

Der verdrehbare Wechselarm 27 ermöglicht es, dass immer zwei Werkzeuge in Vorbereitung im Uebergabemodul sind, so dass bei kurzen Bearbeitungszeiten das neue Werkzeug innert kürzester Zeit zur Verfügung steht.

Figur 9 zeigt rein schematisch den Gesamtaufbau des Werkzeugmagazins, bestehend aus Dockmodul 30, Uebergabemodul 40, fünf dazwischenliegenden Lagermodulen 50 - 54 und dem Roboter 60, welcher im Zwischengang zwischen den seitlichen Modulteilen verfahrbar angeordnet ist.

## Patentansprüche

1. Werkzeugmagazin mit einer Dockstation (30) zur Entgegennahme und Rückgabe von Werkzeugen, eine Übergabestation (40) zur Übergabe und Zurücknahme von Werkzeugen an bzw. von einer Werkzeugmaschine und zwischen der Dockstation (30) und der Übergabestation (40) angeordneten Lagerstationen, **dadurch gekennzeicknet, daß** sämtliche Stationen als Module ausgebildet sind und zwischen dem Dockmodul (30) und dem Übergabemodul (40) eine beliebig wählbare Anzahl Lagermodule eingesetzt sind, wobei jedes Lagermodul aus zwei sich mit Zwischenabstand spiegelbildlich gegenüberliegenden Teilmodulen (12 und 13) besteht und einen Handlingroboter im Durchgang zwischen den Teilmodulen (12 und 13) der Lagermodule zwischen Dockmodul (30) und Übergabemodul (40) verfahrbar angeordnet ist, wobei dieser Handlingroboter ein im Zwischengang der Lagermodule zwischen Dockmodul (30) und Übergabemodul (40) verfahrbarer Turm ist, an welchem ein Werkzeuggreifer angeordnet ist, der waagrecht, senkrecht und um eine Vertikalachse bewegbar ist.

2. Werkzeugmagazin nach Anspruch 1, **dadurch gekennzeichnet, dass** es für das Handling von Werkzeugen für Horizontalbearbeitungszentren eingesetzt wird.

3. Werkzeugmagazin nach einem der Ansprüche 1 oder 2, **dadurch gekennzeichnet, dass** im Dockmodul ein um eine vertikale Achse drehbarer Werkzeugrechen vorgesehen ist, welcher auf zwei sich diametral gegenüberliegenden Stellen mit einer Anzahl Werkzeugen zum Eindocken bzw. zum Herausnehmen beschickt werden kann.

4. Werkzeugmagazin nach einem der Ansprüche 1 bis 3, **dadurch gekennzeichnet, dass** im Dockmodul auch der Elektrosteuerschrank für das Magazin untergebracht ist, sowie gegebenenfalls eine Anzahl fester Werkzeuglagerplätze.

5. Werkzeugmagazin nach einem der Ansprüche 1 bis 4, **dadurch gekennzeichnet, dass** jedes der aus je zwei sich gegenüberliegenden Teilmodulen gebildete Lagermodul mit einer Vielzahl von Werkzeuglagerplätzen ausgerüstet ist, von denen jeder einer vorbestimmten Zuordnung entspricht.

6. Werkzeugmagazin nach einem der Ansprüche 1 bis 4, **dadurch gekennzeichnet, dass** die Werkzeuglagerplätze durch an den Durchgang für den Handlingroboter angrenzend angeordnete vertikale Rechen gebildet sind.

7. Werkzeugmaschine nach einem der Ansprüche 1 bis 4 oder 6, **dadurch gekennzeichnet, dass** die vertikalen Rechen als zweireihige Rechen ausgebildet sind.

8. Werkzeugmaschine nach einem der Ansprüche 1 bis 4, 6 oder 7, **dadurch gekennzeichnet, dass** jedes Teilmodul mit zwei Rechen ausgerüstet ist.

9. Werkzeugmagazin nach einem der Ansprüche 1 bis 8, **dadurch gekennzeichnet, dass** im Übergabemodul ebenfalls eine Anzahl Werkzeuglagerplätze vorgesehen sind.

10. Werkzeugmagazin nach einem der Ansprüche 1 bis 9, **dadurch gekennzeichnet, dass** der Übergabemodul (20) und die Werkzeugmaschine mit einem Linearzylinder (25) und einen um 180° drehbaren Wechselarm (27) verbunden sind, der das Werkzeug vom Handlingroboter übernimmt und an den Linearzylinder übergibt bzw. umgekehrt.

## Claims

1. Tool magazine comprising a docking station (30) for accepting and returning tools, a transfer station (40) for transferring and taking back tools to and from a machine tool and storage stations arranged between the docking station (30) and the transfer station (40), **characterized in that** all the stations are formed as modules and a freely selectable number of storage modules are used between the docking module (30) and the transfer module (40), each storage module comprising two submodules (12 and 13), positioned opposite each other in mirror image at a distance from one another, and a handling robot being movably arranged in the passage between the submodules (12 and 13) of the storage modules between the docking module (30) and the transfer module (40), this handling robot being a tower which can be made to move in the passage between the storage modules between the docking module (30) and the transfer module (40) and on which there is arranged a tool gripper, which is movable horizontally, vertically and about a vertical axis.

2. Tool magazine according to Claim 1, **characterized in that** it is used for the handling of tools for horizontal machining centres.

3. Tool magazine according to either of Claims 1 and 2, **characterized in that** a tool rack which can be rotated about a vertical axis and can be charged at two diametrically opposite points with a number of tools for docking or for taking out is provided in the docking module.

4. Tool magazine according to one of Claims 1 to 3, **characterized in that** the electrical control cabinet for the magazine is also accommodated in the docking module, and if appropriate a number of fixed tool storage locations.

5. Tool magazine according to one of Claims 1 to 4, **characterized in that** each storage module respectively formed by two opposite submodules is equipped with a multiplicity of tool storage locations, each of which corresponds to a predetermined assignment.

6. Tool magazine according to one of Claims 1 to 4, **characterized in that** the tool storage locations are formed by vertical racks arranged adjacent to the passage for the handling robot.

7. Tool magazine according to one of Claims 1 to 4 or 6, **characterized in that** the vertical racks are formed as two-row racks.

8. Tool magazine according to one of Claims 1 to 4, 6 or 7, **characterized in that** each submodule is equipped with two racks.

9. Tool magazine according to one of Claims 1 to 8, **characterized in that** a number of tool storage locations are likewise provided in the transfer module.

10. Tool magazine according to one of Claims 1 to 9, **characterized in that** the transfer module (20) and the machine tool are connected to a linear cylinder (25) and a changing arm (27), which can rotate through 180° and takes over the tool from the handling robot and transfers it to the linear cylinder, or vice versa.

## Revendications

1. Magasin d'outil comprenant un poste d'arrimage (30) pour accepter et restituer des outils, un poste de transfert (40) pour transférer et reprendre des outils à ou depuis une machine-outil et des postes de stockage disposés entre le poste d'arrimage (30) et le poste de transfert (40), **caractérisé en ce que** tous les postes sont réalisés sous forme de modules et entre le module d'arrimage (30) et le module de transfert (40) est inséré un nombre de modules de stockage quelconque sélectionnable, chaque module de stockage se composant de deux modules partiels (12 et 13) opposés à symétrie spéculaire et espacés l'un de l'autre, et un robot de manutention étant disposé de manière déplaçable dans le passage entre les modules partiels (12 et 13) des modules de stockage situés entre le module d'arrimage (30) et le module de transfert (40), ce robot de manutention étant une tour déplaçable dans le passage intermédiaire des modules de stockage entre le module d'arrimage (30) et le module de transfert (40), un dispositif de préhension d'outil étant disposé sur la tour et pouvant être déplacé horizontalement, verticalement et autour d'un axe vertical.

2. Magasin d'outil selon la revendication 1, **caractérisé en ce qu'**il est utilisé pour la manutention d'outils pour des centres d'usinage horizontaux.

3. Magasin d'outil selon l'une quelconque des revendications 1 ou 2, **caractérisé en ce que** l'on prévoit dans le module d'arrimage un râteau d'outil pouvant tourner autour d'un axe vertical, qui peut être garni d'une pluralité d'outils à arrimer ou à enlever, en deux endroits diamétralement opposés.

4. Magasin d'outil selon l'une quelconque des revendications 1 à 3, **caractérisé en ce que** l'on installe dans le module d'arrimage également l'armoire de commande électrique pour le magasin, ainsi qu'éventuellement un certain nombre de points de support d'outil fixes.

5. Magasin d'outil selon l'une quelconque des revendications 1 à 4, **caractérisé en ce que** chaque module de stockage formé de deux modules partiels opposés est équipé d'une pluralité de points de support d'outil dont chacun correspond à une affectation prédéterminée.

6. Magasin d'outil selon l'une quelconque des revendications 1 à 4, **caractérisé en ce que** les points de support d'outil sont formés par des râteaux verticaux disposés à proximité du passage pour le robot de manutention.

7. Magasin d'outil selon l'une quelconque des revendications 1 à 4 ou 6, **caractérisée en ce que** les râteaux verticaux sont réalisés sous forme de râteaux à deux rangées.

8. Magasin d'outil selon l'une quelconque des revendications 1 à 4, 6 ou 7, **caractérisée en ce que** chaque module partiel est équipé de deux râteaux.

9. Magasin d'outil selon l'une quelconque des revendications 1 à 8, **caractérisé en ce que** l'on prévoit également un certain nombre de points de support d'outil dans le module de transfert.

10. Magasin d'outil selon l'une quelconque des revendications 1 à 9, **caractérisé en ce que** le module de transfert (20) et la machine-outil sont connectés à un cylindre linéaire (25) et un bras de changement (27) pouvant tourner de 180°, qui reprend l'outil du robot de manutention et qui le transfère au cylindre linéaire ou inversement.
